(19) Europäisches Patentamt / European Patent Office / Office européen des brevets

(11) **EP 2 241 404 B1**

(12) **FASCICULE DE BREVET EUROPEEN**

(45) Date de publication et mention de la délivrance du brevet:
**14.11.2018 Bulletin 2018/46**

(51) Int Cl.:
***B25B 21/00*** *(2006.01)*     ***B25B 23/14*** *(2006.01)*
***B23P 19/06*** *(2006.01)*

(21) Numéro de dépôt: **10159831.6**

(22) Date de dépôt: **13.04.2010**

(54) **Procédé pour adapter automatiquement la vitesse de vissage d'un outil de vissage par paliers successifs et outillage correspondant**

Verfahren zum automatischen Anpassen der Schraubgeschwindigkeit eines Schraubwerkzeugs in mehreren aufeinander folgenden Stufen und entsprechendes Werkzeug

Method for automatically adjusting the screwing speed of a screwdriver in several successive steps and corresponding tool

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.04.2009 FR 0952542**

(43) Date de publication de la demande:
**20.10.2010 Bulletin 2010/42**

(73) Titulaire: **Etablissements Georges Renault**
**44800 Saint Herblain (FR)**

(72) Inventeurs:
- **Maris, Josselin**
  **35000 Rennes (FR)**
- **Petit-Bagnard, Gérard**
  **44400, REZE (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A- 0 255 433**     **EP-A- 0 753 377**
**WO-A-00/71302**     **DE-A1- 3 422 522**

**Description**

Le domaine de l'invention est celui de l'outillage. Plus précisément, l'invention concerne l'outillage industriel, et en particulier les outillages prévus pour exercer un vissage avec un couple déterminé.

Dans le domaine de l'invention, les outils de vissage sont très largement utilisés dans le secteur industriel, que les outils soient fixes (ce qui comprend des outils montés sur des machines ou sur des manipulateurs) ou portatifs.

Ces outils peuvent intégrer des moyens moteurs électriques ou pneumatiques selon les applications envisagées.

De plus en plus fréquemment, les outils de vissage utilisés dans le domaine industriel intègrent des moyens ou sont reliés à des systèmes permettant d'assurer une traçabilité des opérations effectuées par l'outil, en assurant par exemple l'enregistrement de résultats tel que le couple final de vissage, l'angle final de vissage, la date et l'heure des opérations ou encore des courbes représentatives de la qualité (bonne ou mauvaise, en fonction de paramètres prédéterminés) du vissage effectué.

Les outillages et/ou les systèmes de ce type permettent donc d'effectuer une gamme étendue d'opérations de paramétrage et de contrôle, ces opérations étant déterminantes pour s'assurer de la qualité des assemblages effectués.

On comprend que, dans une approche industrielle visant la qualité des opérations et leur traçabilité, le couple de serrage ainsi que les données le concernant sont essentielles pour :

- commander correctement les outils ;
- réaliser des assemblages avec précision ;
- obtenir un suivi des résultats de vissage.

Actuellement, les outils de vissage sont donc classiquement équipés de moyens de mesure instantanés du couple de serrage, les données procurées par ces moyens de mesure étant utilisées par des moyens de contrôle du moteur de l'outil pour stopper celui-ci lorsque le couple de serrage final préalablement déterminé est atteint.

De plus, il est courant que les outils de vissage soient conçus pour procéder en deux phases successives :

- une première phase dite de pré-vissage, au cours de laquelle l'outil agit sur l'élément à visser à une vitesse élevée prédéterminée, ceci avec un faible couple ;
- une deuxième phase, dite de serrage, au cours de laquelle l'outil agit sur l'élément à visser à une vitesse prédéterminée, moins élevée que dans la première phase, ceci avec un couple important.

Toutefois, dans la pratique, on constate que le couple de serrage exercé par l'outil dépasse le couple de serrage final de consigne, ceci en raison du temps de réponse de l'outil une fois la consigne d'arrêt moteur émise. Ce phénomène est désigné par le terme anglais « overshooting ».

Bien entendu, ce phénomène est tout à fait indésirable dans la mesure où il entraîne un risque d'endommagement de l'outil et/ou de l'assemblage sur lequel opère l'outil.

Les outils procédant en deux phases successives présentent donc l'inconvénient soit d'engendrer le phénomène précité conduisant à un dépassement de couple lorsque la vitesse prédéterminée pour la phase de serrage est trop rapide, soit d'entraîner une perte de productivité lorsque la vitesse prédéterminée pour la phase de serrage est trop faible.

Par ailleurs, avec ces outils, l'utilisateur doit sélectionner lui-même les vitesses de son programme de vissage, au risque, bien entendu, d'erreurs.

En outre, le programme de vissage, une fois paramétré par l'opérateur, est appliqué à l'outil correspondant pour tous les cycles de vissage effectués par l'outil, ceci indépendamment des caractéristiques des assemblages successifs à réaliser qui peuvent varier d'un assemblage à un autre.

EP 0 753 377 A décrit un procédé de vissage comprenant :

- une phase d'apprentissage pour définir parmi des courbes de vitesse en fonction du couple de serrage prédéfinies la courbes permettant d'exécuter le plus rapidement possible un vissage sans overshoot,
- des phases de vissage selon la courbe retenue.

L'invention a notamment pour objectif de pallier cet inconvénient de l'art antérieur.

Plus précisément, l'invention a pour objectif de proposer une méthode pour adapter automatiquement la vitesse de vissage d'un outil de vissage en vue d'éviter des dépassements de couple en fin de cycle de vissage.

En ce sens, l'invention a notamment pour objectif de proposer une telle méthode dans laquelle la vitesse de vissage est directement associée aux variations du couple de serrage tout en évitant des variations aléatoires de la vitesse de vissage.

L'invention a également pour objectif de fournir une telle méthode qui soit transposable aisément d'un type d'assemblage à un autre et, plus précisément, qui adapte de façon intelligente le cycle de vissage en fonction des caractéristiques de l'assemblage en cours de réalisation (changement de vis, raideur d'assemblage...).

En ce sens, un objectif de l'invention est de fournir une telle méthode qui s'affranchisse des choix opérés par un utilisateur.

L'invention a aussi pour objectif de fournir une telle méthode qui n'implique pas ou peu de perte de productivité.

Ces objectifs, ainsi que d'autres qui apparaîtront par la suite, sont atteints grâce à l'invention qui a pour objet un procédé pour adapter automatiquement la vitesse de vissage d'un outil de vissage pendant un cycle de vissage, selon la revendication 1.

Ainsi, l'invention permet d'obtenir un procédé de diminution progressive de la vitesse de vissage qui s'avère optimisé et fiable dans la mesure où les paliers prennent en compte la valeur de variation de couple en fonction du temps, ce qui s'avère déterminant pour éviter un dépassement de couple final cible.

En outre, le fait de calculer la vitesse de consigne d'après une combinatoire de deux coefficients, l'un associé à une plage de valeur de variation de couple en fonction du temps et l'autre associé à une plage de valeur de pourcentage de couple final, contribue à affiner les paramètres d'exécution du procédé et de diminution progressive de la vitesse de vissage et, par conséquent, à optimiser ce procédé.

De plus, un cycle de vissage est exécuté selon des paliers au cours desquels la vitesse de vissage reste constante ; le nombre de paliers successifs peut alors être limité de façon prédéterminée de telle sorte que peu de changements de vitesse de vissage interviennent au cours du cycle de vissage, assurant un confort à l'opérateur, ou à tout le moins évitant de procurer une sensation de variation de vitesse par à-coups et de façon aléatoire.

En outre, un procédé selon l'invention adapte automatiquement, de lui-même, la vitesse de vissage de l'outil en fonction de variations pouvant intervenir tant en cours d'un cycle de vissage que de variations liées à des changements d'assemblage (changement de vis, changement de raideur...).

On note que le procédé selon l'invention adaptant "de lui-même" la vitesse de vissage, le déroulement d'un cycle de vissage n'est pas assujetti à la saisie de paramètres de vissage par un opérateur sur un contrôleur d'outil comme c'est le cas selon les solutions classiques de l'art antérieur.

Préférentiellement, le procédé s'exécute selon l'une au moins des caractéristiques suivantes :

- la valeur de K2 augmente lorsque lesdits moyens de mesure dudit couple de serrage détectent une valeur de couple inférieure à celle de ladite borne inférieure ;
- la valeur de K2 diminue lorsque lesdits moyens de mesure dudit couple de serrage détectent une valeur de couple supérieure à celle de ladite borne supérieure.

Selon une solution préférée, un changement de palier entraîne une révision du coefficient K1.

Selon une solution avantageuse, la valeur de K1 est déterminée pour un palier en prenant en considération une mesure de la variation du couple en fonction du temps réalisé au cours du palier précédent, la valeur initiale de K1 étant fixée égale à 1.

Selon un mode de réalisation particulier, le procédé s'exécute de telle sorte que le coefficient K1 est révisé sur la base d'un tableau indiquant plusieurs plages successives et croissantes de variation de couple en fonction du temps et fournissant une valeur de K1 pour chaque plage, la valeur de K1 dans le tableau diminuant au fur et à mesure de la croissance des plages.

On note que la valeur initiale de K1 étant fixée égale à 1, si le déroulement du procédé implique le retour au premier palier, cela n'implique pas nécessairement le retour de K1 à la valeur initiale.

Selon une autre caractéristique avantageuse, le coefficient K2 est prédéterminé pour chaque palier.

L'invention concerne également un outil de vissage selon la revendication 7.

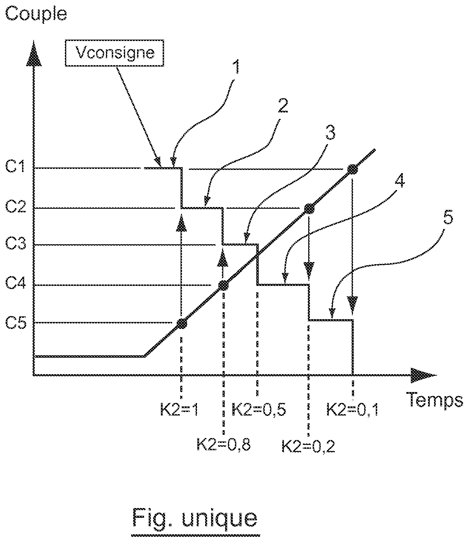

D'autres caractéristiques et avantages de l'invention apparaîtront plus clairement à la lecture de la description suivante d'un mode de réalisation préférentiel de l'invention, donné à titre illustratif et non limitatif, en référence à la figure unique annexée qui illustre une courbe de diminution progressive de la vitesse de vissage en cinq paliers successifs réalisés avec un procédé selon un mode de réalisation préférentiel de l'invention.

Tel qu'indiqué précédemment, le principe de l'invention réside dans le fait de proposer un procédé pour adapter automatiquement la vitesse de vissage en fonction de l'évolution du couple, dans lequel la vitesse de vissage est adaptée selon des paliers successifs définis par des bornes inférieures et supérieures de variation du couple en fonction du temps et de pourcentage du couple final à atteindre, la vitesse de vissage d'un palier au palier suivant étant diminuée et calculée en fonction de deux coefficients :

- un premier coefficient K1, déterminé en fonction de la vitesse d'évolution du couple dC/dT ou, en d'autres termes, en fonction de la variation du couple en fonction du temps ;
- un deuxième coefficient K2, déterminé en fonction du niveau de couple atteint (mesuré) par rapport au couple final à atteindre.

Pour chaque palier, la vitesse de consigne Vc est définie de la façon suivante :

$$Vc = Vmax \; x \; K1 \; x \; K2,$$

avec Vmax = vitesse maximale de l'outil (issue des caractéristiques du moteur de l'outil et éventuellement de la réduction incorporée à l'outil), et avec K1 et K2 définis de telle sorte que la vitesse de consigne soit inférieure ou égale à la vitesse maximum de l'outil.

Un outil de vissage pour la mise en oeuvre d'un procédé de diminution progressive de la vitesse de vissage selon l'invention comprend :

- des moyens de mesure d'un couple de serrage, comprenant par exemple une jauge de contrainte ;
- un microprocesseur de contrôle destiné notamment à exécuter les opérations suivantes :

  - calcul de la variation du couple en fonction du temps ;
  - calcul de la vitesse de consigne Vc selon l'équation Vc = Vmax x K1 x K2 ;
  - mémorisation d'un couple final de serrage à atteindre ;
  - mémorisation de valeurs pour les coefficients K1 et K2;
  - mémorisation de bornes inférieures et supérieures de variations de couple en fonction du temps définissant des plages, et mémorisation d'une valeur du coefficient K1 pour chaque plage ;
  - mémorisation de valeurs inférieures et supérieures de pourcentage du couple final pour chaque palier.

On note que la variation du couple en fonction du temps (le couple de serrage instantané étant mesuré par la ou les jauges de contrainte) est calculée par le microprocesseur selon l'équation suivante :

$$dC/dt = \Delta C \, / \, \Delta T \; x \; couple \; de \; serrage \; final \; à \; atteindre \, / \, couple \; maximum$$

$$de \; l'outil.$$

On note par ailleurs que, au cours de chaque palier, les coefficients K1 et K2 étant fixés de façon prédéterminée, la vitesse de vissage de consigne Vc étant égale à Vmax x K1 x K2 (la valeur de Vmax étant une constante pour l'outil considéré), la vitesse de vissage de consigne Vc est également une constante pendant le palier considéré.

L'adaptation automatique de la vitesse de vissage en fonction des conditions de vissage (se traduisant par une évolution du couple de serrage, la valeur du couple de serrage, mesurée, étant une donnée d'entrée pour l'exécution du procédé selon l'invention) est obtenue en modifiant les coefficients K1 et K2 d'un palier au palier suivant.

Pour ce faire, on fait varier la valeur du coefficient K2 de telle sorte que :

- la valeur de K2 augmente lorsque lesdits moyens de mesure dudit couple de serrage détectent une valeur de couple inférieure à celle de ladite borne inférieure ;
- la valeur de K2 diminue lorsque lesdits moyens de mesure dudit couple de serrage détectent une valeur de couple supérieure à à celle de ladite borne supérieure.

Parallèlement, un changement de palier entraîne une révision du coefficient K1, la valeur de K1 étant préférentiellement déterminée pour un palier en prenant en considération une mesure de la variation du couple en fonction du temps réalisé au cours du palier précédent (avec une valeur initiale de K1 fixée égale à 1).

Selon un mode de réalisation particulier, le procédé s'exécute selon l'une au moins des caractéristiques suivantes :

- le coefficient K1 est révisé, après un changement de palier, de telle sorte que la valeur de K1 diminue lorsque la variation de couple en fonction du temps du palier n-1 précédent augmente par rapport à la variation de couple en fonction du temps du palier n-2 ;
- le coefficient K1 est révisé, après un changement de palier, de telle sorte que la valeur de K1 augmente lorsque la variation de couple en fonction du temps du palier n-1 précédent diminue par rapport à la variation de couple en fonction du temps du palier n-2.

On note que le microprocesseur de contrôle est programmé de telle sorte que, lorsqu'il exécute le calcul de la vitesse de consigne Vc avec Vc = Vmax x K1 x K2 , si K1 x K2 > 1, le microprocesseur procède automatiquement à une correction de façon à fixer K1 x K2 = 1.

La figure annexée illustre un graphique de diminution progressive de la vitesse de consigne de vissage selon un mode de réalisation préférentiel d'un procédé selon l'invention, comprenant cinq paliers successifs.

Comme cela apparaît sur la figure annexée, la diminution progressive de vitesse de vissage est réalisée en cinq paliers successifs 1, 2, 3, 4, 5.

Une valeur du couple instantané est fournie au microprocesseur de l'outil par les moyens de mesure du couple de l'outil (le graphe d'évolution du couple en fonction du temps étant ainsi représenté de façon linéaire, ce qui n'est pas nécessairement le cas dans tous les assemblages).

Les paliers 1, 2, 3, 4, 5 sont prédéfinis par des bornes inférieures et supérieures mémorisés par le microprocesseur, ces bornes étant, selon un exemple de mode de réalisation, les suivantes :

- palier 1 : plage de valeur de pourcentage du couple final allant de 0 à 10% du couple final ;
- palier 2 : plage de valeur de pourcentage du couple final allant de 10 à 30 % du couple final ;
- palier 3 : plage de valeur de pourcentage du couple final allant de 30 à 70 % du couple final ;
- palier 4 : plage de valeur de pourcentage du couple final allant de 70 à 90 % du couple final ;
- palier 5 : plage de valeur de pourcentage du couple final allant de 90 à 100 % du couple final.

Les valeurs de K1 et K2 sont quant à elles prédéterminées et mémorisées par le microprocesseur.

Selon le présent exemple de mode de réalisation, les valeurs de K2 sont les suivantes :

- palier 1 : K2 =1 ;
- palier 2 : K2 = 0,8 ;
- palier 3 : K2 = 0,5 ;
- palier 4 : K2 = 0,2 ;
- palier 5 : K2 = 0,1.

La valeur de K1 est quant à elle déterminée pour un palier n en prenant en considération une mesure de la variation du couple en fonction du temps (dC/dT) réalisée au cours du palier n-1.

Comme indiqué précédemment, un changement de palier entraîne une révision du coefficient K1. Ainsi, lorsque la valeur du couple mesurée fournie au microprocesseur de l'outil attend une des bornes d'un palier considéré, le procédé impose un changement de palier à l'outil pour l'exécution du cycle de vissage en cours et, par conséquent applique la valeur de K2 correspondant au nouveau palier.

En parallèle, le microprocesseur utilise les données de variation de couple et de durée du palier précédent pour calculer la variation moyenne de couple en fonction du temps au cours du palier précédent.

Le microprocesseur utilise un tableau de données mémorisées pour sélectionner la valeur de K1 en fonction du résultat du calcul de la variation moyenne de couple en fonction du temps au cours du palier précédent, les valeurs de K1 étant par exemple les suivantes :

- K1 = 1,8 pour dC/dt compris entre 0 et 30 Nm/s ;
- K1 = 1,4 pour dC/dt compris entre 30 et 75 Nm/s ;
- K1 = 1 pour dC/dt compris entre 75 et 150 Nm/s ;
- K1 = 0,8 pour dC/dt compris entre 150 et 210 Nm/s ;
- K1 = 0,6 pour dC/dt compris entre 210 et 300 Nm/s ;
- K1 = 0,4 pour dC/dt supérieure à 300 Nm/s.

Ces valeurs sont mémorisées sous forme d'un d'un tableau indiquant plusieurs plages successives et croissantes de variation de couple en fonction du temps et fournissant une valeur de K1 pour chaque plage. De façon générale, la valeur de K1 dans le tableau diminue au fur et à mesure de la croissance des plages.

Bien entendu, le nombre de paliers pourra être adapté en fonction du type d'assemblage à réaliser, et les valeurs de K1 et K2 pourront être adaptées en conséquence, ceci sans sortir du cadre de l'invention.

## Revendications

1. Procédé pour adapter automatiquement la vitesse de vissage d'un outil de vissage pendant un cycle de vissage, l'outil comprenant :

   - des moyens de mesure d'un couple de serrage ;
   - des moyens de calcul de la variation dudit couple en fonction du temps ;
   - des moyens de calcul d'une vitesse de consigne Vc en fonction d'une vitesse de vissage maximale $V_{Max}$ dudit outil ;
- des moyens de mémorisation d'un couple final de serrage ;

ledit cycle de vissage comprenant l'exécution d'au moins deux paliers successifs, la vitesse de consigne Vc étant maintenue constante au cours de chaque palier, **caractérisé en ce que** la vitesse de consigne Vc est adaptée d'un palier au palier suivant, ladite vitesse de consigne Vc étant calculée de telle sorte que :

$$Vc = V_{Max} \ x \ K1 \ x \ K2,$$

K1 étant un coefficient constant pour une plage de variations du couple en fonction du temps et K2 étant un coefficient constant pour une plage de pourcentages dudit couple final, chaque palier étant prédéfini par une borne inférieure et une borne supérieure exprimées sous forme d'un pourcentage du couple final, le passage d'un palier au palier suivant entraînant une modification de la valeur du coefficient K2.

2. Procédé selon la revendication la revendication 1, **caractérisé en ce que** la valeur de K2 augmente lorsque lesdits moyens de mesure dudit couple de serrage détectent une valeur de couple inférieure à celle de ladite borne inférieure.

3. Procédé selon la revendication la revendication 1, **caractérisé en ce que** la valeur de K2 diminue lorsque lesdits moyens de mesure dudit couple de serrage détectent une valeur de couple supérieure à à celle de ladite borne supérieure.

4. Procédé selon l'une quelconque des revendications 1 à 3, **caractérisé en ce qu'**un changement de palier entraîne une révision du coefficient K1.

5. Procédé selon la revendication 4, **caractérisé en ce que** la valeur de K1 est déterminée pour un palier en prenant en considération une mesure de la variation du couple en fonction du temps réalisée au cours du palier précédent, la valeur initiale de K1 étant fixée égale à 1.

6. Procédé selon la revendication 5, **caractérisé en ce que** le coefficient K1 est révisé sur la base d'un tableau indiquant plusieurs plages successives et croissantes de variation de couple en fonction du temps et fournissant une valeur de K1 pour chaque plage, la valeur de K1 dans le tableau diminuant au fur et à mesure de la croissance des plages.

7. Outil de vissage comprenant :

- des moyens de mesure d'un couple de serrage ;
- des moyens de calcul de la variation dudit couple en fonction du temps ;
- des moyens de calcul d'une vitesse de consigne Vc en fonction d'une vitesse de vissage maximale $V_{Max}$ dudit outil ;
- des moyens de mémorisation d'un couple final de serrage ;
- des moyens d'exécution d'au moins deux paliers successifs, la vitesse de consigne Vc étant maintenue constante au cours de chaque palier ,

**caractérisé en ce que** les moyens d'exécution étant configurés de manière à ce que ladite vitesse de consigne Vc soit adaptée d'un palier au palier suivant et est calculée de telle sorte que :

$$Vc = V_{Max} \ x \ K1 \ x \ K2,$$

K1 étant un coefficient constant pour une plage de variations du couple en fonction du temps et K2 étant un coefficient constant pour une plage de pourcentages dudit couple final, chaque palier étant prédéfini par par une borne inférieure et une borne supérieure exprimées sous forme d'un pourcentage du couple final, le passage d'un palier au palier suivant entraînant une modification de la valeur du coefficient K2.

**Patentansprüche**

1. Verfahren zum automatischen Anpassen der Schraubdrehzahl eines Schraubwerkzeugs während eines Schraubzyklus, wobei das Werkzeug aufweist:

   - Mittel zum Messen eines Anzugsdrehmoments;
   - Mittel zum Berechnen der Variation des Drehmoments in Abhängigkeit von der Zeit;
   - Mittel zum Berechnen einer Solldrehzahl Vc in Abhängigkeit von maximalen Schraubdrehzahl $V_{Max}$ des Werkzeugs;
   - Mittel zum Speichern eines endgültigen Anzugsdrehmoments;

   wobei der Schraubzyklus das Ausführen von mindestens zwei aufeinander folgenden Stufen aufweist, wobei die Solldrehzahl Vc während jeder Stufe konstant gehalten wird, **dadurch gekennzeichnet, dass** die Solldrehzahl Vc von einer Stufe zur nächsten Stufe angepasst wird, wobei die Solldrehzahl Vc derart berechnet wird, dass:

$$Vc = V_{Max} \times K1 \times K2,$$

   wobei K1 ein konstanter Koeffizient für einen Bereich von Variationen des Drehmoments in Abhängigkeit von der Zeit ist und K2 ein konstanter Koeffizient für einen Bereich von Prozentsätzen des endgültigen Drehmoments ist, wobei jede Stufe durch eine untere Grenze und eine obere Grenze, die beide ausgedrückt als ein Prozentsatz des endgültigen Drehmoments und vordefiniert sind, wobei der Übergang von einer Stufe zur nächsten Stufe eine Änderung des Werts des Koeffizienten K2 mit sich bringt.

2. Verfahren nach Anspruch 1, **dadurch gekennzeichnet, dass** sich der Wert K2 erhöht, wenn die Mittel zum Messen des Anzugsdrehmoments einen Drehmomentwert erfassen, der niedriger als jener der unteren Grenze ist.

3. Verfahren nach Anspruch 1, **dadurch gekennzeichnet, dass** sich der Wert K2 verringert, wenn die Mittel zum Messen des Anzugsdrehmoments einen Drehmomentwert erfassen, der höher als jener der oberen Grenze ist.

4. Verfahren nach einem der Ansprüche 1 bis 3, **dadurch gekennzeichnet, dass** ein Stufenwechsel zu einer Revision des Koeffizienten K1 führt.

5. Verfahren nach Anspruch 4, **dadurch gekennzeichnet, dass** der Wert von K1 für eine Stufe bestimmt wird, indem eine Messung der Variation des Drehmoments in Abhängigkeit von der Zeit, die während des vorhergehenden Schrittes durchgeführt worden ist, berücksichtigt wird, wobei der Anfangswert von K1 auf gleich 1 festgelegt wird.

6. Verfahren nach Anspruch 5, **dadurch gekennzeichnet, dass** der Koeffizient K1 auf der Grundlage von einer Tabelle revidiert wird, die mehrere aufeinander folgende und zunehmende Bereiche der Variation des Drehmoments in Abhängigkeit von der Zeit angibt und einen Wert K1 für jeden Bereich bereitstellt, wobei der Wert K1 in der Tabelle in dem Maße abnimmt, in dem die Bereiche zunehmen.

7. Schraubwerkzeug, umfassend:

   - Mittel zum Messen eines Anzugsdrehmoments;
   - Mittel zum Berechnen der Variation des Drehmoments in Abhängigkeit von der Zeit;
   - Mittel zum Berechnen einer Solldrehzahl Vc in Abhängigkeit von einer maximalen Schraubdrehzahl $V_{Max}$ des Werkzeugs;
   - Mittel zum Speichern eines endgültigen Anzugsdrehmoments;
   - Mittel zum Ausführen von mindestens zwei aufeinander folgenden Stufen, wobei die Solldrehzahl Vc während jeder Stufe konstant gehalten wird,

   **dadurch gekennzeichnet, dass** die Mittel zum Ausführen derart konfiguriert sind, dass die Solldrehzahl von einer Stufe zur nächsten Stufe angepasst wird und derart berechnet wird, dass:

$$Vc = V_{Max} \times K1 \times K2,$$

7

wobei K1 ein konstanter Koeffizient für einen Bereich von Variationen des Drehmoments in Abhängigkeit von der Zeit ist und K2 ein konstanter Koeffizient für einen Bereich von Prozentsätzen des endgültigen Drehmoments ist, wobei jede Stufe durch eine untere Grenze und eine obere Grenze, die beiden ausgedrückt als ein Prozentsatz des endgültigen Drehmoments und vordefiniert sind, wobei der Übergang von einer Stufe zur nächsten Stufe eine Änderung des Werts des Koeffizienten K2 mit sich bringt.

## Claims

1. Method for automatically adapting the tightening speed of a tightening tool during a tightening cycle, the tool comprising:

   - means for measuring a tightening torque;
   - means for calculating the variation of said torque over time;
   - means for calculating a reference speed Vc according to a maximum tightening speed $V_{Max}$ of said tool;
   - means for memorising a final tightening torque;

   said tightening cycle comprising the execution of at least two successive stages, the reference speed Vc being kept constant during each stage, **characterised in that** the reference speed Vc is adapted from one stage to the next stage, said reference speed Vc being calculated such that:

   $$Vc = V_{Max} \times K1 \times K2,$$

   K1 being a constant coefficient for a range of variations of the torque over time and K2 being a constant coefficient for a range of percentages of said final torque, each stage being predefined by a lower limit and an upper limit both expressed in the form of a percentage of the final torque, the passage from one stage to the next stage leading to a modification in the value of the coefficient K2.

2. Method according to claim 1, **characterised in that** the value of K2 increases when said means for measuring said tightening torque detect a torque value lower than that of said lower limit.

3. Method according to claim 1, **characterised in that** the value of K2 decreases when said means for measuring said tightening torque detect a torque value greater than that of said upper limit.

4. Method according to any one of claims 1 to 3, **characterised in that** a stage change leads to a revision of the coefficient K1.

5. Method according to claim 4, **characterised in that** the value of K1 is determined for a stage by considering a measurement of the torque variation over time taken during the preceding stage, the initial value of K1 being set equal to 1.

6. Method according to claim 5, **characterised in that** the coefficient K1 is revised based on a table indicating several successive and increasing ranges of torque variation over time and providing a value of K1 for each stage, the value of K1 in the table decreasing as the increase of the ranges.

7. Tightening tool comprising:

   - means for measuring a tightening torque;
   - means for calculating the variation of said torque over time;
   - means for calculating a reference speed Vc according to a maximum tightening speed $V_{Max}$ of said tool;
   - means for memorising a final tightening torque;
   - means for executing at least two successive stages, the reference speed Vc being kept constant during each stage,

   **characterised in that** the means for executing being configured such that said reference speed Vc is adapted from one stage to the next stage and is calculated such that:

$$Vc = V_{Max} \times K1 \times K2,$$

K1 being a constant coefficient for a range of variations of the torque over time and K2 being a constant coefficient for a range of percentages of said final torque, each stage being predefined by a lower limit and an upper limit both expressed in the form of a percentage of the final torque, the passage from one stage to the next stage leading to a modification in the value of the coefficient K2.

Fig. unique

**EP 2 241 404 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0753377 A